# DEMANDE DE BREVET EUROPEEN

(11) **EP 4 631 801 A1**
(43) Date de publication de la demande: **15.10.2025**
(21) Numéro de dépôt: 25169759.5
(22) Date de dépôt: 10.04.2025
(51) Int. Cl.: B60S 1/68

(54) **DISPOSITIF DE PROTECTION D'UNE JANTE DE ROUE DE VÉHICULE AUTOMOBILE ÉQUIPÉE D'UN FREIN À TAMBOUR**

(30) Priorité: 11.04.2024 FR 2403735
(71) Demandeur: Renault s.a.s, 92100 Boulogne Billancourt (FR)
(72) Inventeur: BONNET, Emmanuel, 72100 LE MANS (FR); FAUQUEUX, Olivier, 78280 GUYANCOURT (FR); JAMOIS, Wilfried, 72100 LE MANS (FR); TRANDAFIR, Antoaneta, 062203 BUCAREST (RO)

(57) **Abrégé**

Ce dispositif de protection (1) d'une jante (2) d'une roue de véhicule automobile équipée d'un frein à tambour (3) comprend une première partie de fixation (4) solidaire d'une deuxième partie de nettoyage (5) formant un racloir (6) configuré pour enlever des substances étrangères susceptibles de s'accumuler sur une surface intérieure (7) de la jante (2). La première partie de fixation (4) comprend une portion tubulaire destinée à être emmanchée à une extrémité (9a) d'un bras (9) d'un essieu (10) supportant la jante (2).

## Description

### Domaine technique

L'invention concerne un dispositif de protection d'une jante de roue de véhicule automobile équipée d'un frein à tambour. L'invention concerne également un véhicule automobile équipé d'un tel dispositif de protection.

### Techniques antérieures

Certains véhicules automobiles présentent des roues équipés de freins à tambour. Des actionneurs mécatroniques de tels freins à tambour sont généralement disposés à proximité des jantes des roues.

Selon les conditions de roulement, il est possible que de la neige, de la glace ou de la boue s'accumule à l'intérieur de la jante. En plus du poids indésirable apporté, cette accumulation peut, lors du roulement, entrer en contact avec l'actionneur mécatronique du frein à tambour et peut perturber son fonctionnement, voire provoquer son endommagement.

A ce jour, il n'existe pas de solution permettant de protéger de tels actionneurs mécatroniques contre les effets de telles accumulations.

### Exposé de l'invention

Au vu de ce qui précède, l'invention vise à fournir un dispositif de protection d'une jante d'une roue de véhicule automobile équipée d'un frein à tambour. Le dispositif de protection visé par l'invention permet de protéger le frein à tambour des effets délétères engendrés par une accumulation de substances étrangères sur la jante.

L'invention a pour objet un dispositif de protection d'une jante d'une roue de véhicule automobile équipée d'un frein à tambour. Le dispositif comprend une première partie de fixation solidaire d'une deuxième partie de nettoyage formant un racloir configuré pour enlever des substances étrangères susceptibles de s'accumuler sur une surface intérieure de la jante. La première partie de fixation comprend une portion tubulaire destinée à être emmanchée à une extrémité d'un bras d'un essieu supportant la jante. Un tel dispositif de protection effectue un nettoyage continu de l'intérieur de la jante lors du roulage du véhicule permettant ainsi de protéger le frein à tambour et notamment un actionneur mécatronique du frein à tambour contre les effets délétères susceptibles d'être engendrés par l'accumulation de substances étrangères à l'intérieur de la jante.

Avantageusement, le racloir comprend une plaque rigide munie d'une arrête vive disposée à une première distance minimale prédéterminée de la surface intérieure de la jante, ladite arrête vive étant disposée par rapport à la surface intérieure de la jante à une première distance maximale prédéterminée et inférieure à une deuxième distance minimale entre la jante et un actionneur mécatronique du frein à tambour. Une telle configuration permet une protection efficiente de l'actionneur mécatronique.

De préférence, l'arrête vive et la plaque rigide sont inclinées par rapport à un axe de rotation de la roue de manière à évacuer les substances étrangères enlevées vers un côté intérieur du véhicule lors d'un avancement du véhicule. Une telle configuration facilite l'évacuation des substances étrangères en dehors de la jante.

Par exemple, la plaque rigide du racloir est inclinée par rapport à un axe vertical. Une telle configuration facilite un positionnement correct de l'arrête vive par rapport à la surface intérieure de la jante.

Selon une caractéristique, la première partie de fixation est munie d'un bras de support de la deuxième partie de nettoyage, le bras de support s'étendant transversalement au bras de l'essieu vers un côté extérieur du véhicule. Un tel bras de support permet d'ajuster la position de la plaque rigide du racloir.

Par exemple, la première partie de fixation est vissée, clipée, rivetée ou soudée au bras de l'essieu.

De préférence, la première partie de fixation comprend une plaque de fermeture de la portion tubulaire. Une telle plaque de fermeture empêche la pénétration de substances étrangères à l'intérieur de la portion tubulaire favorisant sa durabilité.

Avantageusement, la plaque de fermeture comprend une collerette adaptée pour buter contre l'extrémité du bras de l'essieu. Cette configuration favorise un positionnement correct de l'arrête vive par rapport à la surface intérieure de la jante.

Selon un autre aspect, l'invention a pour objet un ensemble comprenant un dispositif de protection de jante tel que défini ci-dessus et un bras d'un essieu supportant la jante.

Selon un autre aspect, l'invention a pour objet un véhicule automobile comprenant au moins une jante de roue équipée d'un frein à tambour, le véhicule étant muni d'au moins un dispositif de protection de jante tel que défini ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue de derrière en perspective d'un dispositif de protection d'une jante d'une roue de véhicule automobile équipée d'un frein à tambour selon l'invention ; et
[Fig 2] est une vue de face en perspective du dispositif de protection de la [Fig 1].

### Exposé détaillé d'au moins un mode de réalisation

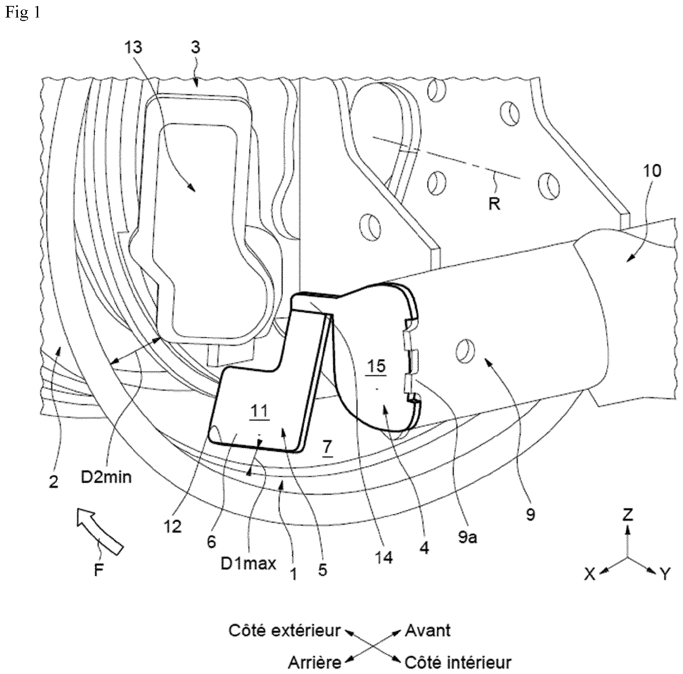

Tel que représenté sur la figure 1, un dispositif de protection 1 d'une jante 2 d'une roue de véhicule automobile équipée d'un frein à tambour 3 selon l'invention comprend une première partie de fixation 4 solidaire d'une deuxième partie de nettoyage 5. Dans l'exemple de la figure 1, la jante 2 est la jante arrière gauche du véhicule. Bien entendu, le dispositif de protection 1 peut être disposé sur toute autre jante du véhicule.

La deuxième partie de nettoyage 5 forme un racloir 6 configuré pour enlever des substances étrangères susceptibles de s'accumuler sur une surface intérieure 7 de la jante 2.

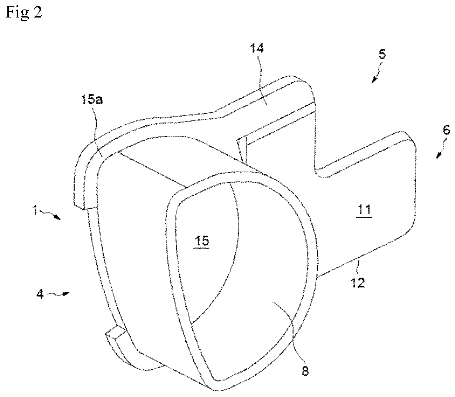

La première partie de fixation 4 comprend une portion tubulaire 8 (figure 2) destinée à être fixée par emmanchement à une extrémité 9a d'un bras 9 d'un essieu 10 supportant la jante 2.

Il est à noter que des éléments identiques ou similaires portent les mêmes références, d'une figure à une autre.

Afin d'augmenter encore la solidité de la fixation du dispositif de protection 1, la partie de fixation 4 peut être vissée, clipée, rivetée ou soudée au bras 9 de l'essieu 10.

Le racloir 6 comprend une plaque rigide 11 munie d'une arrête vive 12 disposée à une première distance minimale D1min de la surface intérieure 7 de la jante 2. Autrement dit, la distance minimale entre l'arrête vive 12 et la surface intérieure 7 de la jante 2 est égale à la première distance minimale D1min. La première distance minimale D1min a une valeur prédéterminée permettant d'empêcher le frottement entre l'arrête 12 et la surface intérieure 7 de la jante 2.

L'arrête vive 12 est également disposée à une première distance maximale D1max de la surface intérieure 7 de la jante 2. Autrement dit, la distance maximale entre l'arrête vive 12 et la surface intérieure 7 de la jante 2 est égale à la première distance maximale D1max. La première distance maximale D1max a une valeur prédéterminée inférieure à une deuxième distance minimale D2min entre la jante 2 et un actionneur mécatronique 13 du frein à tambour 3.

De préférence, l'arrête vive 12 et la plaque rigide 11 sont inclinées par rapport à un axe de rotation R de la roue de manière à évacuer les substances étrangères enlevées vers un côté intérieur du véhicule lors d'un avancement du véhicule. Par avancement du véhicule, on comprend l'avancement du véhicule vers l'avant. Par exemple, le sens de rotation de la jante 2 lors de l'avancement du véhicule est représenté sur la figure 1 par la flèche F. En variante, il reste possible de prévoir que l'arrête vive 12 et la plaque rigide 11 soient parallèles à l'axe de rotation R.

Dans l'exemple de réalisation illustré sur la figure 1, la plaque rigide 11 du racloir 6 est inclinée par rapport à un axe vertical Z. La valeur de l'angle d'inclinaison formé par la plaque rigide 11 avec la verticale est choisie de manière à respecter les valeurs prédéterminées des premières distances maximale et minimale D1max et D1min. En variante, il est possible que la plaque rigide 11 du racloir 6 ne soit pas inclinée par rapport à l'axe vertical Z. Autrement dit, il est possible que la plaque rigide 11 du racloir 6 soit verticale.

De préférence, la première partie de fixation 4 est munie d'un bras de support 14 de la deuxième partie de nettoyage 5. Le bras de support 14 s'étend transversalement au bras 9 vers un côté extérieur du véhicule et facilite un bon positionnement latéral de la deuxième partie de nettoyage 5 par rapport à la jante 2.

Tel qu'illustré sur les figures 1 et 2, la première partie de fixation 4 comprend une plaque de fermeture 15 de la portion tubulaire 8. Autrement dit, le passage défini par la zone centrale creuse de la portion tubulaire 8 est fermé par la plaque de fermeture 15. De préférence, la plaque de fermeture 15 est munie d'une collerette 15a adaptée pour buter contre l'extrémité 9a du bras 9 lorsque la portion tubulaire 8 est emmanchée à l'extrémité 9a du bras 9.

Dans la présentation détaillée de l'invention, les termes utilisés ne doivent pas être considérés comme limitant l'invention aux modes de réalisation exposés, mais doivent être interprétés pour y inclure tous les équivalents dont la prévision est à la portée de l'homme du métier en appliquant ses connaissances générales à la mise en œuvre de l'enseignement qui vient de lui être divulgué.

Bien évidemment, l'invention n'est pas limitée aux modes de réalisation décrits précédemment et fournis uniquement à titre d'exemple. Les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

De plus, l'invention englobe diverses modifications, formes alternatives et autres variantes que pourra envisager l'homme du métier dans le cadre exposé.

## Revendications

1. Dispositif de protection (1) d'une jante (2) d'une roue de véhicule automobile équipée d'un frein à tambour (3), **caractérisé en ce qu'**il comprend une première partie de fixation (4) solidaire d'une deuxième partie de nettoyage (5) formant un racloir (6) configuré pour enlever des substances étrangères susceptibles de s'accumuler sur une surface intérieure (7) de la jante (2), la première partie de fixation (4) comprenant une portion tubulaire (8) destinée à être emmanchée à une extrémité (9a) d'un bras (9) d'un essieu (10) supportant la jante (2).

2. Dispositif de protection selon la revendication 1, dans lequel le racloir (6) comprend une plaque rigide (11) munie d'une arrête vive (12) disposée à une première distance minimale (D1min) prédéterminée de la surface intérieure (7) de la jante (2), ladite arrête vive (12) étant disposée par rapport à la surface intérieure (7) de la jante (2) à une première distance maximale (D1max) prédéterminée et inférieure à une deuxième distance minimale (D2min) entre la jante (2) et un actionneur mécatronique (13) du frein à tambour (3).

3. Dispositif de protection selon la revendication 2, dans lequel l'arrête vive (12) et la plaque rigide (11) sont inclinées par rapport à un axe de rotation (R) de la roue de manière à évacuer les substances étrangères enlevées vers un côté intérieur du véhicule lors d'un avancement du véhicule.

4. Dispositif de protection selon la revendication 2 ou 3, dans lequel la plaque rigide (11) du racloir (6) est inclinée par rapport à un axe vertical (Z).

5. Dispositif de protection selon l'une quelconque des revendications 1 à 4, dans lequel la première partie de fixation (4) est munie d'un bras de support (14) de la deuxième partie de nettoyage (5), ledit bras de support (14) s'étendant transversalement au bras (9) de l'essieu (10) vers un côté extérieur du véhicule.

6. Dispositif de protection selon l'une quelconque des revendications 1 à 5, dans lequel la première partie de fixation (4) est vissée, clipée, rivetée ou soudée au bras (9) de l'essieu (10).

7. Dispositif de protection selon l'une quelconque des revendications 1 à 6, dans lequel la première partie de fixation (4) comprend une plaque de fermeture (15) de la portion tubulaire (8).

8. Dispositif de protection selon la revendication 7, dans lequel la plaque de fermeture (15) comprend une collerette (15a) adaptée pour buter contre l'extrémité (9a) du bras (9) de l'essieu (10).

9. Ensemble comprenant un dispositif de protection (1) d'une jante (2) selon l'une des revendications 1 à 8 et un bras (9) d'un essieu (10) supportant la jante (2).

10. Véhicule automobile comprenant au moins une jante (2) de roue équipée d'un frein à tambour (3), ledit véhicule étant muni d'au moins un dispositif de protection (1) de jante (2) selon l'une des revendications 1 à 8.
